# EUROPEAN PATENT SPECIFICATION

(11) **EP 0 641 245 B1**
(45) Date of publication and mention of the grant of the patent: **14.02.1996**
(21) Application number: 92917754.1
(22) Date of filing: 18.08.1992
(51) Int. Cl.: B01D 53/56, B01D 53/62, B01D 53/72, B01D 53/94, B01J 29/14

(54) **TWO-STAGE EXHAUST GAS CONVERSION CATALYST SYSTEM**
ZWEISTUFIGES ABGASKATALYSATOR SYSTEM
SYSTEME CATALYTIQUE DE CONVERSION DE GAS D'ECHAPPEMENT A DEUX ETAGES

(30) Priority: 03.09.1991 US 753537
(43) Date of publication of application: 08.03.1995
(73) Proprietor: FORD-WERKE AKTIENGESELLSCHAFT, D-50725 Köln (DE); FORD FRANCE S. A., F-92506 Rueil-Malmaison Cédex (FR); FORD MOTOR COMPANY LIMITED, Brentwood Essex (GB)
(72) Inventor: MONTREUIL, Clifford, Dearborn, MI 48124 (US); GANDHI, Haren, Sakarlal, Farmington Hills, MI 48331 (US); CHATTHA, Mohinder, Singh, Dearborn, MI 48121 (US)
(74) Representative: Messulam, Alec Moses
(86) International application number: EP9201882
(87) International publication number: WO9304767

(56) References cited:
- EP-A- 0 365 308
- EP-A- 0 393 905
- US-A- 4 297 328

## Description

This invention is directed to a two-stage exhaust gas conversion catalyst system comprising a first stage reducing catalyst and a second stage oxidative catalyst.

A number of catalysts have been suggested to convert automotive exhaust gas components like carbon monoxide, hydrocarbons, and nitrogen oxides into other gases. The nitrogen oxides present in the exhaust gas are nitric oxide (NO) and nitrogen dioxide (NO₂), both generally referred to by the formula NOₓ. Present simultaneous control of the three components, nitrogen oxides, carbon monoxide and hydrocarbons, is by so-called "three-way" catalysts like platinum/rhodium and palladium/rhodium. These catalysts operate properly when the fuel mixture of a gasoline engine is slightly "rich" and the environment is a reducing atmosphere, i.e., in a narrow A/F ratio range between about 14.7 and 14.4. Such three-way catalysts are less than efficient in the reduction of NOₓ when engines are operated on the lean side where the A/F ratio is greater than 14.7. It is desirable, however, to operate engines on the lean side to realise a benefit in fuel economy, estimated to be in the range of 5-7%.

U.S. -A- 4,297,328 discloses a copper- containing high-silica zeolite described as being useful as a three-way catalyst to reduce preferentially oxides of nitrogen to N₂ on the "lean" side of the A/F (air/fuel) mixture. High-silica zeolites are described as those preferably above 20.

Copper-containing zeolites are prone to degradation at the high temperatures found in automobile exhaust systems. That is, the copper tends to react with the alumina of the zeolite and form copper aluminate which is a low surface area compound with reduced catalytic activity.

The invention overcomes problems associated with prior art catalysts and is directed to a two-stage exhaust gas conversion catalyst system for purification of exhaust gases containing nitrogen oxides, carbon monoxide and hydrocarbons. The exhaust gas may be automobile exhaust gas and the invention is adapted to be useful in lean-burn situations, i.e, with oxygen rich environments. The system comprises a first stage catalyst and a second stage catalyst. The first stage catalyst is a combination of (i) refractory oxide impregnated with transition metal (ii) and transition metal-containing zeolite. The refractory oxide is selected from the group consisting essentially of zirconia, silica, titania and lanthana. The second stage catalyst is an oxidizing catalyst such as a noble metal on alumina. Said first and second catalyst are arranged such that the exhaust gas can be exposed to said second stage catalyst after being exposed to said first stage catalyst. The first stage catalyst combination may comprise an intimate mixture of refractory oxide impregnated with transition metal and transition metal-containing zeolite or a layer of refractory oxide impregnated with transition metal on transition metal-containing zeolite. A preferred transition metal in the present invention is copper and the preferred refractory oxide is zirconia. Each of the catalysts may be deposited on a substrate such as a honeycomb ceramic or metallic carrier or be provided in pelleted form.

The invention according to another aspect is directed to a method according to claim 10.

The invention will now be described further, by way of example, with reference to the accompanying drawings, in which :

Fig. 1 graphically shows a comparison of NOₓ conversions to N₂ over a wide range of hydrocarbon concentrations when using a conventional Cu-ZSM-5 monolithic catalyst as compared to a CuO/ZrO₂/Cu-ZSM-5 monolithic catalyst according to an embodiment of the present invention.
Fig. 2 graphically shows a comparison of hydrocarbon conversions over a wide range of hydrocarbon concentrations when comparing the catalysts of Fig. 1.
Fig. 3 illustrates the effect of a conventional oxidative catalyst placed in series (downstream) with a CuO/ZrO₂/Cu-ZSM-5 according to an embodiment of the present invention.

The invention is directed to a two-stage catalyst system for the purification of exhaust gases containing nitrogen oxides, carbon monoxide and hydrocarbons. The first stage catalyst is placed close to the engine manifold, and converts NOₓ to N₂ through a reduction reaction with hydrocarbons present in the exhaust gas stream. It also converts the majority of hydrocarbons present to carbon dioxide and water and a portion of hydrogen to water. Partial conversion of carbon monoxide into carbon dioxide also occurs. The exhaust gases then pass through a second stage catalyst which further oxidizes any reducing species present.

The first stage catalyst comprises a combination of two materials, refractory oxide impregnated with transition metal and transition metal-containing zeolite. This combination may be in the form of an intimate mixture of the two materials or in the form of a layer of one material carrying a layer of the other, preferably a layer of refractory oxide impregnated with transition metal on top of transition metal-containing zeolite present on a substrate. Generally, the two materials of the first stage catalyst are employed in a ratio between about 10% to 90% and 90% to 10% by weight. Preferably, they are employed in a weight ratio between about 40% to 60% and 60% to 40% by weight.

The refractory oxide on which the transition metal is impregnated is selected from the group consisting essentially of zirconia (ZrO₂), silica (SiO₂), titania (TiO₂), and lanthana (La₂O₃), with zirconia being preferred. The refractory oxide also may comprise compatible mixtures of these oxides. The transition metal comprises, but is not limited to, Cu, Co, Ni, Cr, Fe, Mn and compatible mixtures thereof. Transition metal is meant herein to include elemental metal as well as metal oxide. The transition metal present in the two materials of the first stage catalyst, e.g., in the refractory oxide impregnated with transition metal and the transition metal-containing zeolite may be independently selected from transition metals, i.e., one may be copper and the other be chromium. Preferably, the same transition metal or mixture of transition metals is employed in both materials. Most preferably this transition metal is copper. Optionally, but preferably, alumina is included along with the transition metal impregnated refractory oxide as a binder in amounts up to about 35% by weight based on the total weight of the alumina and the transition metal impregnated refractory oxide. According to the present invention, transition metal is not impregnated on the alumina because of its detrimental effect.

The refractory oxide impregnated with transition metal can be made by various techniques as will be apparent to one skilled in the art in view of the present disclosure. Such techniques will be discussed hereinafter with specificity to copper-containing zirconia but such techniques apply generally to other transition metal embodiments according to the present invention.

According to one method of making a copper-containing zirconia, a quantity of zirconia is soaked, repeatedly if desired, in a solution of a copper compound, subsequently dried, and then calcined at an elevated temperature between, e.g., 300-900°C, often at about 600°C. If alumina is to be incorporated as a binder, it would be mixed with the copper impregnated zirconia in a slurry prior to being applied as a separate layer or being combined with the transition metal-containing zeolite. The transition metal compound, in this embodiment being copper, would be one that is soluble or can be dispersed in a liquid. Particularly useful copper compounds are those which are soluble in an aqueous solution or which can be solubilized therein, e.g., with the aid of an acid or base. Exemplary of such copper compounds are copper salts like copper nitrate and copper sulfate; organo-copper compounds like carboxylates of copper, copper acetate and copper (cupric) amines; organo-complexes of copper like diammine copper acetate; tetraamine copper sulfate, and copper acetylacetonate. Exemplary other transition metal compounds include cobaltous acetate, nickel acetate, ferric chloride, chromic nitrate and manganese acetate. Still other transition metal compounds useful in this invention to form the refractory oxide impregnated with transition metal will be apparent to those skilled in the art in view of the present disclosure.

If the calcining is carried out in air, the copper compound decomposes and forms copper oxide. If, on the other hand, the calcining is carried out in a reducing atmosphere the copper compound may be reduced to elemental copper. Preferably, the transition metal, in this embodiment being copper, is present in an amount between about 0.1 and 20% by weight in the copper-containing zirconia. When the first stage catalyst is placed in use, oxygen present in the exhaust gas will oxidize the copper to copper oxide.

In addition to the refractory oxide impregnated with transition metal, the first stage catalyst comprises a second material, transition metal-containing zeolite. The zeolite are selected from high silica zeolites having a SiO₂/Al₂O₃ molar ratio which exceeds about 10 and preferably about 20. Representative of such high-silica zeolites are "silicalite", ZSM-5, ZSM-8, and ZSM-11. Examples of such zeolites and methods of making are disclosed in U.S. patent 4,297,328 to Ritscher et al which is hereby expressly incorporated by reference for such teachings. It is to be understood that other zeolites having the properties described herein may be used without departing from the scope of the present invention. Silicalite is a novel crystalline silica composition having a hydrophobic/organophilic characteristic which permits its use for selectively adsorbing organic materials preferentially to water. Silicalite is more completely described in US-A-4,061,724 which is hereby expressly incorporated by reference for such teachings. A zeolite in the protonated (acid form) may also be used. The diameter of the zeolite particle is not limited to any particular size. Smaller particle sizes are preferred as providing more uniform coatings on the catalyst support than those of larger particle size.

The transition metal such as copper is provided into the zeolite by ion exchange. Generally a sodium zeolite is contacted by an aqueous solution of another cation, in this case an aqueous solution of a soluble copper compound such as copper acetate wherein replacement of the sodium ion by copper ion takes place. It is advantageous to provide as much transition metal ion in the zeolite as possible since the amount of transition metal present in the zeolite is directly related to the catalytic activity of the first stage catalyst. After replacing the sodium ion with metal ion, the zeolite is generally washed to remove excess surface transition metal compound. It is not necessary to do so, however.

The first stage catalyst may be made by grinding each of the copper-containing zirconia and the copper-containing zeolite to a fine powder, mixing them together, forming a slurry of them and then applying the slurry to a substrate such as metal or ceramic honeycomb. While it is preferable to make the first stage catalyst this way, according to another embodiment it may be made by layering one material onto the other. For example, a layer of the copper-containing zeolite may be applied to the substrate and then a layer of copper-containing zeolite may be applied on top of the copper-containing zirconia layer. Binders may also be incorporated in forming the first stage catalyst, including the alumina discussed herein.

It has been found that while copper-containing zeolite displays three-way catalyst activity, the copper has a tendency with use to react detrimentally with the alumina at high temperatures. As a result of this reaction copper aluminate is formed which is a low surface area compound with reduced catalytic activity. No similar detrimental reaction takes place with the refractory oxides such as zirconia employed according to the present invention. It is thus believed that by employing copper- containing zirconia in addition to copper-containing zeolite, additional copper is present in the first stage catalyst which is available to act catalytically and will not detrimentally react with the alumina. This insures that the copper remains in a form that is catalytically active.

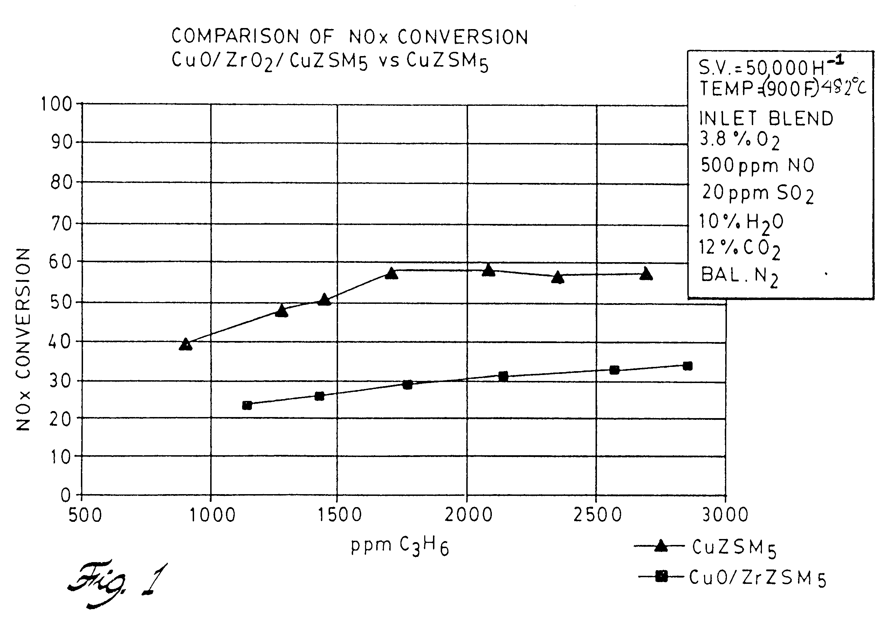

Fig. 1 gives a comparison between the reduction of nitric oxide by a CuO/ZrO₂/Cu-ZSM-5 catalyst (at a 33% by weight loading) according to an embodiment of the present invention and the reduction of nitric oxide by Cu- ZSM-5 catalyst (also at a 33% by weight loading), both taken over a wide hydrocarbon concentration range. Conditions between the two runs are identical. A space velocity (S.V.) of 50,000h⁻¹ (space velocity being defined as the volume of gas over the volume of catalyst per time) and a temperature of 400°C (900 F) are used, typical of actual internal combustion engine exhaust gas compositions. The gas composition is described in the graph. As is evident, the reduction of nitric oxide by the CuO/ZrO₂/Cu-ZSM-5 catalyst is more efficient than that by the Cu-ZSM-5 catalyst over the entire range of hydrocarbon concentrations examined. The CuO/ZrO₂/Cu-ZSM- 5 catalyst reaction is on the average a factor of 2 more efficient than the comparable Cu-ZSM-5 reaction.

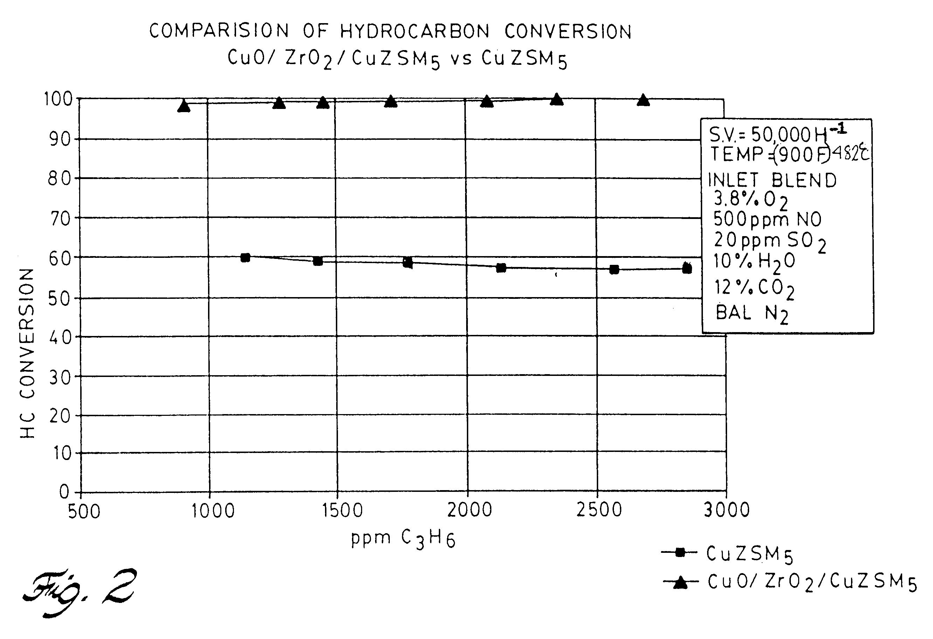

Fig. 2 gives a comparison between the oxidation of hydrocarbon (propylene) by a CuO/ZrO₂/Cu-ZSM-5 catalyst and the oxidation of hydrocarbon by a Cu-ZSM-5 catalyst under the same conditions as in Fig. 1. The oxidation of hydrocarbon by the such CuO/ZrO₂/Cu-ZSM-5 catalyst is more efficient than that of the Cu-ZSM-5 catalyst. The CuO/ZrO₂/Cu-ZSM-5 reaction is on the average a factor of 2/3 more efficient than the comparable Cu-ZSM-5 reaction, yielding essentially quantitative conversion of hydrocarbon over the entire concentration range examined.

The second stage catalyst according to the present invention comprises a conventional oxidative catalyst such as palladium on alumina which further oxidises any reducing species present, resulting in near quantitative conversion of hydrocarbons, carbon monoxide and hydrogen. While palladium on alumina is preferred for this second stage, it is not meant to be so limited. This second stage may comprise other oxidative catalysts like Pt/Al₂O₃, Pd/Al₂O₃, Pt/Rh/Al₂O₃, and Pd/Pt/Al₂O₃. While not as preferred as the above, the second stage catalyst may comprise zeolite in place of the alumina. The metal may be provided on the zeolite by ion-exchange and/or impregnation as will be apparent to one skilled in the art in view of the present disclosure.

### Test Procedure

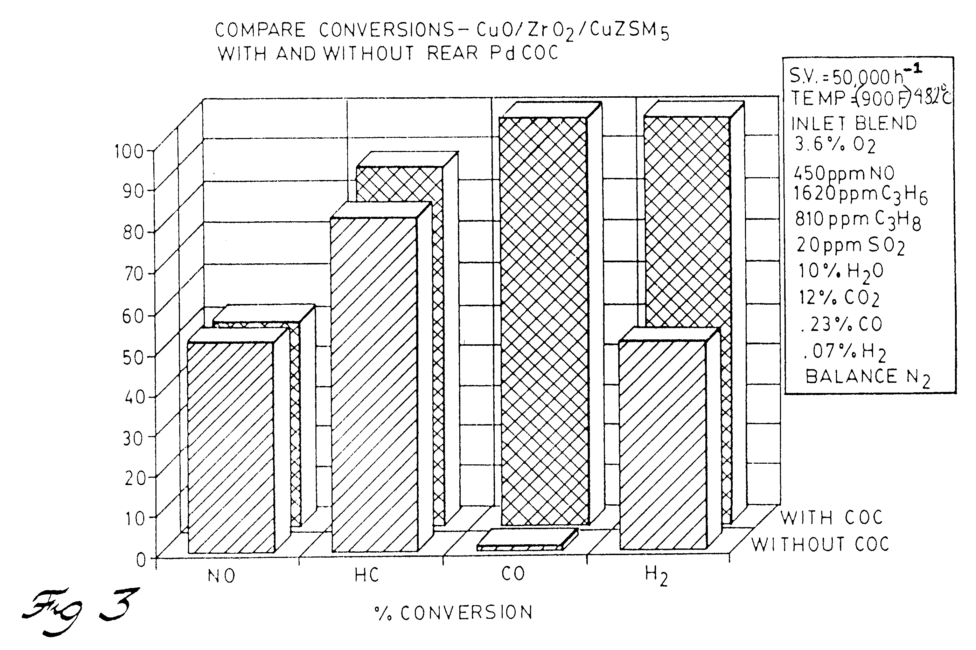

The catalysts are characterized in a quartz steady-state flow reactor. Gases are blended in a manifold by means of mass-flow controllers, routed through a by-pass line to an analytical train for analysis, and then routed over the catalyst. The post-catalyst gases are then analysed to determine the extent of reaction of the various constituents. The catalyst used is in the form of a cylindrical ceramic monolith measuring 2.5cm (1 inch) in diameter by 3.75cm (1.5 inches) long. Total gas flow over the catalyst is 16.09 liters/min which gives a space velocity of 50,000 h⁻¹. An inlet temperature of 482°C (900 F) is used in all tests. The composition of the gas stream used in the following examples is that shown in Fig. 3.

### Example 1

(a) Copper acetate monohydrate (7.8 g) is dissolved in 150 ml of acetic acid/water mixture (50:50). Zirconia, 50 g, is placed in a beaker and is impregnated with the copper acetate solution by incipient wetness technique. It takes three impregnations to finish all the solution. The impregnated material is dried at 120°C between impregnations and after the final impregnation. It is then calcined at 600°C for four hours.
(b) Cu-ZSM-5, which contains 3% by weight ion-exchanged copper, is obtained from Universal Oil Products (UOP). This material is in a powder form suitable for direct use.
(c) A mixture of equal weight amounts of materials (a) and (b) above is ball-milled in a sufficient amount of water to make a fine slurry. The slurry is applied to a cordierite monolith in several steps to obtain 33% loading of this mixture on the monolith as a % of the aggregate weight. The final drying is carried out at 120°C for three hours and the calcination is carried out at 600°C for four hours to form the first stage catalyst.

The first stage catalyst prepared above is coupled with a 1% Pd/Al₂O₃ conventional oxidative catalyst (as the second stage catalyst) to form a two stage catalyst system according to the present invention. The system is placed within a testing device with the second stage downstream of the first and tested according to the described test procedure. Fig. 3 gives a comparison of conversions of nitric oxide, hydrocarbon, carbon monoxide and hydrogen which is obtained with the two stage catalyst of the example as well as that of the first stage alone. As can be seen, the use of the second stage in addition to the first stage improves the oxidation of carbon monoxide and hydrogen and also hydrocarbon but to a lesser extent for hydrocarbon.

### Example 2

Zeolite ZSM-5 (UOP) is ion exchanged by stirring with a 0.05 M solution of copper acetate. The material is filtered, washed, and ion exchanged three times. It is then dried at 120°C for 3 hours and then calcined at 600°C for three hours. The product contains 2.0 % copper by weight.

A first stage catalyst is prepared according to the procedures in Example 1(c) using the Cu/ZrO₂ product described in Example 1(a) and the material prepared in this example instead of that of 1(b). The catalyst is provided on a cordierite monolith according to the procedure of Example 1.

The first stage catalyst prepared in Example 2 is coupled with the conventional oxidative catalyst used in Example 1 immediately downstream to form a two stage catalyst system according to the present invention. Similar test procedures give results comparable to those of Example 1 except that NOₓ conversion decreases about 10% with the decreased copper loading in the zeolite.

### Example 3

A first stage catalyst is prepared as described in Example 1(c) from a 40:60 weight mixture of the materials described in Example 1(a) and 1(b).

The first stage catalyst prepared in this example is provided on a cordierite monolith according to the procedure of Example 1. It is coupled with a Pt/Al₂O₃ conventional oxidative catalyst immediately downstream to form a two stage catalyst system according to the present invention. Test results are comparable to those of Example 1.

### Example 4

A first stage catalyst is made according to the procedure of Example 1. Catalyst grade -alumina (Degussa Corp.) in an amount of 25% by weight based on the total weight of alumina and copper impregnated zirconia is additionally included during slurry formation in the composition of Example 1(c) as a binder.

The first stage catalyst prepared in this example is provided on a cordierite monolith according to the procedure of Example 1. It is coupled with the conventional oxidative catalyst used in Example 1 immediately downstream to form a two stage catalyst system according to the present invention. The initial efficiency of catalytic activity is the same as in Example 1, but deteriorates somewhat with time.

### Example 5

Cu-ZSM-5, described in Example 1(b), is ball milled with sufficient water to form a fine slurry and then coated on a monolith to obtain 21% weight loading. The sample is subsequently coated with a Cu/ZrO₂ product (prepared as in Example 1(a)) from a water slurry thereof to impart a 11.5% coating by weight on the Cu-ZSM-5 layer. The monolith so prepared is calcined at 600°C for five hours to produce the first stage catalyst.

The first stage catalyst catalyst as prepared above is provided on a cordierite monolith. It is coupled with a 1% Pt/Al₂O₃ conventional oxidative catalyst to form a two stage catalyst system according to the present invention. Testing gives results comparable to those of Example 1.

### Example 6

Fifty grams of zeolite ZSM-8 (UOP) is ion-exchanged by stirring with a 0.01 M solution of nickel acetate. The material is filtered, washed and ion-exchanged three more times. It is then dried at 120°C and calcined at 600°C for three hours. The product contains 3.2% nickel by weight.

A first stage catalyst is prepared as described in Example 1(c) by employing the above material and the Cu/ZrO₂ product from Example 1(a) in equal amounts by weight.

The first stage catalyst catalyst prepared in this example is provided on a cordierite monolith according to the procedure of Example 1. It is coupled with a 1% Pd/Al₂O₃ conventional oxidative catalyst. Test results are similar to those of Example 1 except that NO conversion is approximately 75% of that of Example 1.

### Example 7

Zirconia is impregnated with copper as described in Example 1(a) to deposit 7.5% copper by weight. This product is employed to prepare a catalyst product as described in Example 1 (c).

The first stage catalyst prepared in this example is provided on a cordierite monolith according to the procedure of Example 1. It is coupled with a 1% Pt/Al₂O₃ conventional oxidative catalyst. Test results are similar to those of Example 1.

### Example 8

Fifty grams of silica are impregnated with 8.3 g of copper acetate as described in Example 1(a). A first stage catalyst is prepared from this silica and copper acetate product and Cu-ZSM-5 as described in Example 1(c).

It is coupled with a 1% Pd/Al₂O₃ conventional oxidative catalyst. The test procedure as described in Example 1 shows the emission reductions comparable to those of Example 1.

### Example 9

Fifteen grams of titania and 35 grams of zirconia are mixed in a beaker and the mixture is impregnated with 8.1 grams of copper acetate as described in Example 1(a). A first stage catalyst is prepared following the procedure of Example 1(b) and (c). The second stage is prepared as in Example 1. Test results of the two-stage catalyst system are similar to those shown in Example 1.

### Example 10

Fifty grams of zirconia are soaked in a solution of 12 grams of lanthanum nitrate in 50 ml of water. The material is dried at 125°C and then calcined at 450°C for five hours. This material is impregnated with 9.7 grams of copper acetate as described in Example 1(a). With the use of this Cu/La₂O₃/ZrO₂ material and Cu-ZSM-5, the first stage catalyst is obtained as described in Example 1. This first stage is combined with the second stage described in Example 1 and is subjected to testing. The results show that NOₓ, CO and hydrocarbon conversions are comparable to those seen in Example 1.

## Claims

1. A two-stage exhaust gas conversion catalyst system for purification of exhaust gases containing nitrogen oxides, carbon monoxide and hydrocarbons which comprises:
a combination of (i) refractory oxide impregnated with transition metal and (ii) transition metal-containing zeolite, as a first stage catalyst, said refractory oxide being selected from the group consisting essentially of zirconia, silica, titania, and lanthana; and an
oxidative catalyst, as a second stage catalyst,
said first and second stage catalyst being arranged such that the exhaust gas can be exposed to said second stage catalyst after being exposed to said first stage catalyst.

2. A system according to claim 1, wherein said transition metal of said refractory oxide impregnated with transition metal and said transition fetal-containing zeolite are independently selected from the group of transition metal comprising copper, cobalt, nickel, chromium, iron, manganese and compatible mixtures thereof.

3. A system according to claim 1, wherein the transition metal is present in said refractory oxide impregnated with transition metal in an amount between about 0.1 and 20 weight percent based on the weight of said refractory oxide impregnated with transition metal.

4. A system according to claim 1, wherein said combination comprises (i) said refractory oxide impregnated with transition metal and (ii) said transition metal-containing zeolite in a weight ratio between about 90% to 10% and 10% to 90%.

5. A system according to claim 1, wherein said zeolite has a SiO₂/Al₂O₃ molar ratio greater than 10.

6. A system according to claim 1, wherein said oxidative catalyst comprises a noble metal on alumina.

7. A system according to claim 1, wherein the first stage catalyst combination comprises an intimate mixture of said refractory oxide impregnated with transition metal and said transition metal-containing zeolite.

8. A system according to claim 1, wherein the first stage catalyst combination comprises a layer of said refractory oxide impregnated with transition metal adhered to a layer of said transition metal-containing zeolite.

9. A system according to claim 1, wherein said first stage catalyst is a combination of (i) zirconia impregnated with copper and (ii) copper-containing zeolite, said zeolite having a SiO₂/Al₂O₃ molar ratio greater than 10.

10. A method for the conversion of exhaust gases containing nitrogen oxides, carbon monoxide and hydrocarbons which comprises sequentially exposing said first stage catalyst and said second catalyst of the catalyst system as claimed in any one of the preceding claims.

## Patentansprüche

1. Ein zweistufiges Abgaskatalysatorensystem zur Reinigung von Abgasen, die Stickoxide, Kohlenmonoxid und Kohlenwasserstoffe enthalten, umfassend: eine Kombination aus (i) einem feuerfesten Oxid, das mit einem Übergangsmetall getränkt ist, und (ii) einem ein Übergangsmetall enthaltenden Zeolithen als Katalysator für die erste Stufe, wobei dieses feuerfeste Oxid aus dar Reihe ausgewählt ist, die im wesentlichen aus Zirkonoxid, Silika, Titandioxid und Lanthanoxid besteht; und
einen oxydativen Katalysator als Katalysator für die zweite Stufe, wobei die Katalysatoren für diese erste und diese zweite Stufe so angeordnet sind, daß die Abgase diesem Katalysator der zweiten Stufe ausgesetzt werden können, nachdem sie diesem Katalysator der ersten Stufe ausgesetzt waren.

2. Ein System nach Anspruch 1, worin dieses Übergangsmetall von diesem feuerfesten Oxid, das mit Übergangsmetall getränkt ist, und von diesem ein Übergangsmetall enthaltenden Zeolithen frei aus der Reihe von Übergangsmetallen gewählt sind, die Kupfer, Kobalt, Nickel, Chrom, Eisen, Mangan und verträgliche Mischungen davon umfaßt.

3. Ein System nach Anspruch 1, worin das Übergangsmetall in diesem feuerfesten Oxid, das mit Übergangsmetall getränkt ist, mit einem Anteil von zirka 0.1 bis 20 Gewichtsprozent, bezogen auf das Gewicht dieses mit Übergangsmetall getränkten feuerfesten Oxides, anwesend ist.

4. Ein System nach Anspruch 1, worin diese Kombination (i) dieses mit Übergangsmetall getränkte feuerfeste Oxid und (ii) diesen ein Übergangsmetall enthaltenden Zeolithen in einem Gewichtsverhältnis von zirka 90% zu 10% bis 10% zu 90% umfaßt.

5. Ein System nach Anspruch 1, worin dieser Zeolith ein molares Verhältnis SiO₂/Al₂O₃ aufweist, das größer als 10 ist.

6. Ein System nach Anspruch 1, worin dieser oxydative Katalysator ein Edelmetall auf Aluminiumoxid umfaßt.

7. Ein System nach Anspruch 1, worin diese Kombination für den Katalysator der ersten Stufe eine innige Mischung aus diesem mit Übergangsmetall getränkten feuerfesten Oxid und diesem ein Übergangsmetall enthaltenden Zeolithen umfaßt.

8. Ein System nach Anspruch 1, worin diese Kombination für den Katalysator der ersten Stufe eine Schicht aus diesem mit Übergangsmetall getränkten feuerfesten Oxid umfaßt, das an einer Schicht aus diesem ein Übergangsmetall enthaltenden Zeolithen haftet.

9. Ein System nach Anspruch 1, worin dieser Katalysator der ersten Stufe eine Kombination aus (i) mit Kupfer getränktem Zirkonoxid und (ii) kupferhaltigem Zeolithen ist, wobei dieser Zeolith ein molares Verhältnis SiO₂/Al₂O₃ aufweist, das größer als 10 ist.

10. Ein Verfahren zum Konvertieren von Abgasen, die Stickoxide, Kohlenmonoxid und Kohlenwasserstoffe enthalten, das das aufeinanderfolgende Aussetzen dieses Katalysators der ersten Stufe und dieses Katalysators der zweiten Stufe des Katalysatorensystems nach irgendeinem der vorhergehenden Ansprüche umfaßt.

## Revendications

1. Système de catalyseur à deux étages pour la conversion de gaz d'échappement, pour purifier des gaz d'échappement contenant des oxydes de l'azote, du monoxyde de carbone et des hydrocarbures, ce système comprenant :
une combinaison de (i) un oxyde réfractaire imprégné d'un métal de transition, et (ii) de la zéolite contenant du métal de transition, comme catalyseur de premier étage, ledit oxyde réfractaire étant choisi dans le groupe ou ensemble consistant essentiellement en de l'oxyde de zirconium, de la silice, de l'oxyde de titane et de l'oxyde de lanthane; et
un catalyseur d'oxydation, à titre de catalyseur de second étage,
ledit catalyseur de premier étage et ledit catalyseur de second étage étant disposés de manière que le gaz d'échappement puisse être exposé audit catalyseur de second étage après avoir été exposé audit catalyseur de premier étage.

2. Système selon la revendication 1,dans lequel ledit métal de transition dudit oxyde réfractaire imprégné par du métal de transition et ledit métal de transition contenu dans la zéolite sont choisis, indépendamment l'un de l'autre, dans le groupe ou ensemble d'un métal de transition comprenant du cuivre, du cobalt, du nickel, du chrome, du fer, du manganèse et leurs mélanges compatibles.

3. Système selon la revendication 1, dans lequel le métal de transition est présent dans ledit oxyde réfractaire, imprégné du métal de transition, en une quantité comprise entre environ 0,1 et 20 % en poids, sur la base du poids dudit oxyde réfractaire imprégné du métal de transition.

4. Système selon la revendication 1, dans lequel ladite combinaison comprend (i) ledit oxyde réfractaire imprégné du métal de transition, et (ii) ladite zéolite imprégnée de métal de transition, selon un rapport pondéral compris entre 90 % à 10 % et 10 % à 90 %.

5. Système selon la revendication 1, dans lequel ladite zéolite présente un rapport molaire SiO₂/Al₂O₃ supérieur à 10.

6. Système selon la revendication 1, dans lequel ledit catalyseur d'oxydation comprend un métal noble sur de l'alumine.

7. Système selon la revendication 1, dans lequel la combinaison du catalyseur de premier étage comprend un mélange intime dudit oxyde réfractaire imprégné de métal de transition et de ladite zéolite contenant du métal de transition.

8. Système selon la revendication 1, dans lequel la combinaison formant le catalyseur de premier étage comprend une couche dudit oxyde réfractaire imprégné de métal de transition et qui adhère à une couche de ladite zéolite contenant du métal de transition.

9. Système selon la revendication 1, dans lequel ledit catalyseur de premier étage est une combinaison de (i) de l'oxyde de zirconium imprégné de cuivre et de (ii) de la zéolite contenant du cuivre, ladite zéolite ayant un rapport molaire SiO₂O₃/Al₂O₃ supérieur à 10.

10. Procédé pour la conversion de gaz d'échappement contenant des oxydes de l'azote, du monoxyde de carbone et des hydrocarbures, qui comprend l'exposition, successivement, dudit catalyseur du premier étage et dudit catalyseur de second étage du système de catalyseur tel que revendiqué dans l'une quelconque des revendications précédentes.
